# EUROPEAN PATENT APPLICATION

(11) **EP 4 635 601 A1**
(43) Date of publication of application: **22.10.2025**
(21) Application number: 25161156.2
(22) Date of filing: 28.02.2025
(51) Int. Cl.: B01D 53/04

(54) **MULTI-MODAL AIR PURIFICATION SYSTEM WITH FLEXIBLE MANIFOLD**

(30) Priority: 01.03.2024 GB 202403467; 10.09.2024 GB 202413258; 12.09.2024 GB 202413400; 18.09.2024 GB 202413727; 09.10.2024 GB 202414866; 10.10.2024 GB 202414937; 30.10.2024 GB 202416015
(71) Applicant: Sagentia Ltd, Cambridgeshire CB22 7GG (GB); Cohen, Mark Joseph, Cambridge CB22 7GG (GB)
(72) Inventor: COHEN, Mark Joseph, CAMBRIDGE, CB22 7GG (GB); POTTER, Andrew Robert, CAMBRIDGE, CB22 7GG (GB); BYRNE, Louise Anne, CAMBRIDGE, CB22 7GG (GB); LOWDELL, Christopher, CAMBRIDGE, CB22 7GG (GB); MILLINGTON, Roger Bradley, CAMBRIDGE, CB22 7GG (GB)
(74) Representative: Mathys & Squire

(57) **Abstract**

The present invention relates to a system comprising one or more air purification circuits, a method of using the system for removing CO₂ from air, a method of retrofitting the system into a submarine, and a submarine comprising the system. In a specific aspect, a system comprising one or more air purification circuits, the system comprising: a common pollutant outlet, a common clean air outlet; and a common foul air inlet; wherein each circuit comprises an absorption/desorption tank comprising a solid or porous absorption media; wherein each circuit comprises one or more valves which allow fluid communication between the absorption/desorption tank and each one of the common foul air inlet, the common pollutant outlet, and the common clean air outlet to be either opened or closed; and wherein one or more circuit comprises an intermittent air line which is selectively configurable to either be closed or to redirect the fluid communication from the absorption/desorption tank, to instead recirculate into the absorption/desorption tank and/or into another absorption/desorption tank within the system.

## Description

### FIELD OF THE INVENTION

The present invention relates to a system for purifying air. In particular, the present invention relates to a system comprising one or more air purification circuits, a method of using the system for removing pollutants such as CO₂ from air, a method of retrofitting a system into a submarine, and a submarine comprising the system.

### BACKGROUND OF THE INVENTION

In a submarine environment, it is critical to remove carbon dioxide (CO₂) from the atmospheric air to ensure the safety and wellbeing of the submarine crew. Current systems rely on direct liquid-air contactors where CO₂ from the air dissolves into the absorber liquid.

Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages.

It is an object of this invention to provide a technology which is more effective at removing CO₂ from the atmosphere than the existing legacy technologies stated above. It is a further object of this invention to provide an air purification system which is flexible, scalable, that can deal with differing air throughput volume requirements, variable input air quality and variable output air quality requirements. Depending on the active chemistry used, the CO₂ binding process may be absorption, adsorption, dissolution or other molecular process. For the purposes of simplicity, this document will refer to absorption, however this should not be read as limiting the document to this specific process as the principles of the invention apply to any molecular process.

Solid CO₂ absorbers operating in a pressure-swing system configuration are a promising technology for air scrubbing, but suffer from some limitations. One limitation is that in order to provide continuous air scrubbing the system must maintain part of the system in 'absorb' mode and another part in `desorb mode', effectively meaning that large parts of the system must be duplicated. This is space inefficient and physical space is at a premium on a submarine. If absorb rates and desorb rates are dissimilar, then this problem is exacerbated, as the system must be sized to accommodate the slowest process.

System topologies have been filed in UK patent applications GB 2416015.2, GB2403467.0, GB2413258.1, GB2413400.9, GB2414937.9, GB2413727.5 and GB2414866.0, the entirety of which are incorporated by reference herein. These patent applications cover an individual air purification circuit (GB2403467.0 and GB2413258.1), its use in a complete air purification system (GB2413400.9) and system modifications to address specific individual operational requirements (GB2414937.9, GB2413727.5 and GB2414866.0). The present patent application provides a multi-modal air purification system with a flexible manifold system which achieves the basic system aim and the additional operational requirements as described in the aforementioned UK patent applications using a simplified, modular approach.

### SUMMARY OF THE INVENTION

In a first aspect, the present invention provides a system comprising one or more air purification circuits, the system comprising: a common pollutant outlet, a common clean air outlet; and a common foul air inlet; wherein each circuit comprises an absorption/desorption tank comprising a solid or porous absorption media; wherein each circuit comprises one or more valves which allow fluid communication between the absorption/desorption tank and each one of the common foul air inlet, the common pollutant outlet, and the common clean air outlet to be either opened or closed; and wherein one or more circuit comprises an intermittent air line which is selectively configurable to either be closed or to redirect the fluid communication from the absorption/desorption tank, to instead recirculate into the absorption/desorption tank and/or into another absorption/desorption tank within the system.

In a second aspect, the method of removing CO₂ from air using a system as defined herein, wherein each air purification circuit is operated in one of the following modes:
i) absorption pressuring mode: wherein airflow from the absorption/desorption tank to the common pollutant outlet is closed, airflow from the absorption/desorption tank to the common clean air outlet is closed, airflow from the absorption/desorption tank to the intermittent air line is closed, and airflow from the common foul air inlet to the absorption/desorption tank is open;
ii) absorption dwell mode: wherein airflow from the absorption/desorption tank to the common pollutant outlet is closed, airflow from the absorption/desorption tank to the common clean air outlet is closed, airflow from the absorption/desorption tank to the intermittent air line is closed, airflow from the common foul air inlet to the absorption/desorption tank is closed, and wherein the pressure inside the absorption/desorption tank is higher than atmospheric pressure;
iii) absorption flow through mode: wherein airflow from the absorption/desorption tank to the common pollutant outlet is closed, airflow from the absorption/desorption tank to the common clean air outlet is open, airflow from the absorption/desorption tank to the intermittent air line is closed, and airflow from the common foul air inlet to the absorption/desorption tank is open;
iv) absorption recirculation mode: wherein airflow from the absorption/desorption tank to the common pollutant outlet is closed, airflow from the absorption/desorption tank to the common clean air outlet is closed, airflow from the absorption/desorption tank to the intermittent air line is open, and airflow from the common foul air inlet to the absorption/desorption tank is either open or closed, wherein airflow from the intermittent air line to the absorption/desorption tank of the same circuit is open, and the airflow from the intermittent air line to one or more absorption/desorption tank of other circuits is closed;
v) divert mode: wherein airflow from the absorption/desorption tank to the common pollutant outlet is closed, airflow from the absorption/desorption tank to the common clean air outlet is closed, airflow from the absorption/desorption tank to the intermittent air line is open, and airflow from the common foul air inlet to the absorption/desorption tank is either open or closed, wherein airflow from the intermittent air line to the absorption/desorption tank of the same circuit is closed, and the airflow from the intermittent air line to one or more absorption/desorption tank of other circuits is open;
vi) desorption mode: wherein airflow from the absorption/desorption tank to the common pollutant outlet is open, airflow from the absorption/desorption tank to the common clean air outlet is closed, airflow from the absorption/desorption tank to the intermittent air line is closed, and airflow from the common foul air inlet to the absorption/desorption tank is closed;
vii) clean air discharge mode: wherein airflow from the absorption/desorption tank to the common pollutant outlet is closed, airflow from the absorption/desorption tank to the common clean air outlet is open, airflow from the absorption/desorption tank to the intermittent air line is closed, and airflow from the common foul air inlet to the absorption/desorption tank is closed; or
viii) isolated mode: wherein airflow from the absorption/desorption tank to the common pollutant outlet is closed, airflow from the absorption/desorption tank to the common clean air outlet is closed, airflow from the absorption/desorption tank to the intermittent air line is closed, and airflow from the common foul air inlet to the absorption/desorption tank is closed.

In a third aspect, the present invention relates to a method of retrofitting a system as defined herein into a submarine.

In a fourth aspect, the present invention relates to a submarine comprising one or more system as defined herein.

This invention is a system-level innovation which takes advantage of the already on-board and operating 'solution pump' on a submarine. This solution pump provides a source of vacuum which can be utilised by the scrubber system to improve efficiency, thereby reducing system size for a given scrubbing load. Making use of existing mechanical systems (the solution pump) also means that fewer mechanical components are needed. Utilisation of the vacuum system already present and running on a submarine allows this system to be implemented with minimal additional cost, volume or energy burden onto the scrubber system. As well as utilising the on-board vacuum systems, available sources of heat and cooling may optionally also be used in this invention.

The use of vacuum, and optionally heat, will also remove unwanted species that are bound to the active chemistry. For example, water molecules in the incoming air stream may bind to absorption sites, limiting capacity for CO₂ absorption. These unwanted molecules can then persist throughout the absorption/desorption cycles reducing capacity for multiple system cycles.

The invention comprises one or more air purification circuits, each including an absorption/desorption tank. Each circuit can operate in one of several circuit modes including: *absorption* mode, where foul air has pollutants removed from it; *clean air discharge* mode, where the purified air is released; *desorb* mode where pollutants are removed from the air purification circuit; and isolated mode where the circuit is isolated from the remainder of the system.

Absorption mode may be subdivided into (i) *absorption:pressurising* mode where foul air is pumped into the absorption/desorption tank and pressure is built up inside the absorption/desorption tank due to all exit valves being closed; (ii) *absorption:dwell* mode where foul air is isolated under pressure within the absorption/desorption tank and has pollutants removed; (iii) *absorption:flow-through* mode where foul air is pumped through an absorption/desorption tank with cleaned air exit valves open, preventing pressure build up beyond that caused by input and output pump(s); and *absorption: recirculation* mode where foul air is routed from the absorption/desorption tank exit back to its entrance to increase turbulence in the absorption/desorption tank, thereby improving contact between the foul air and the absorber.

A further mode, *divert,* allows the circuit to direct its cleaned or part-cleaned air to another circuit for further purification.

A flexible manifold system connects the individual circuits in the system allowing for multiple modes of operation at the system level. The flexible manifold system allows different air purification circuits of the system to be in different modes of operation at the same time. At a system level, circuits may operate individually or be linked in parallel or adjacent circuits in series, with all modes being available to the system at the same time, subject to a sufficient number of circuits being provided. Selection of which mode a set of circuits operates in may be made based on operational requirements, for example, the required level of air quality, crew loading, crew activity levels, need for silence.

Examples are given using one and four air purification circuits, however these should not be read as limitations as to the number of circuits in any implementation.

### BRIEF DESCRIPTION OF THE FIGURES

Figure 1 shows a first embodiment of a single air purification circuit in absorption:pressurising mode.
Figure 2 shows the embodiment from Figure 1 in absorption:dwell mode.
Figure 3 shows the embodiment from Figure 1 in absorption:flow-through mode.
Figure 4 shows the embodiment from Figure 1 in absorption:recirculation mode.
Figure 5 shows the embodiment from Figure 1 in clean air discharge mode.
Figure 6 shows the embodiment from Figure 1 in desorb mode.
Figure 7 shows the embodiment from Figure 1 in divert mode.
Figure 8 shows the embodiment from Figure 1 in isolated mode.
Figure 9 shows four interconnected circuits (a, b, c and d) of the embodiment from Figure 1. The a-circuit is in absorption:pressurising mode, the b-circuit is in absorption:dwell mode, the c-circuit is in absorption:flow-through mode and the d-circuit is in absorption:recirculation mode.
Figure 10 shows four interconnected circuits (a, b, c and d) of the embodiment from Figure 1. The a-circuit and b-circuit are in clean air discharge mode, the c-circuit and d-circuit are in desorb mode.
Figure 11 shows four interconnected circuits (a, b, c and d) of the embodiment from Figure 1 with valve and pump settings providing series operation of the four circuits.
Figure 12 shows four interconnected circuits (a, b, c and d) of the embodiment from Figure 1. The a-circuit and b-circuit are working in series, the c-circuit and d-circuit are working in series. Both pairs of circuits are working in parallel.
Figure 13 shows an alternative embodiment of a single air purification circuit in absorption:recirculation mode.
Figure 14 shows a variation of the embodiment of the single air purification circuit from Figure 13 with an alternative pump configuration. This circuit is shown in desorb mode.
Figure 15 shows an example of four interconnected air purification circuits (a, b, c, d) of the embodiment shown in Figure 13. The a-circuit and b-circuit are working in series, the c-circuit and d-circuit are working in series. Both pairs of circuits are working in parallel.
Figure 16 shows an example of four interconnected air purification circuits (a, b, c, d) of the embodiment shown in Figure 14. The a-circuit and b-circuit are working in series, the c-circuit and d-circuit are working in series. Both pairs of circuit are working in parallel.
Figure 17 shows a further alternative embodiment of a single air purification circuit in absorption:pressurising mode.
Figure 18 shows an example of three interconnected air purification circuits (a, b, c) of the embodiment shown in Figure 17. The a-circuit is in absorption:pressurising mode; the b-circuit is awaiting part-cleaned air from the a-circuit. The c-circuit is in absorption:pressurising mode.

### DETAILED DESCRIPTION OF THE INVENTION

In a first aspect, the present invention provides system comprising one or more air purification circuits, the system comprising: a common pollutant outlet, a common clean air outlet; and a common foul air inlet; wherein each circuit comprises an absorption/desorption tank comprising a solid or porous absorption media; wherein each circuit comprises one or more valves which allow fluid communication between the absorption/desorption tank and each one of the common foul air inlet, the common pollutant outlet, and the common clean air outlet to be either opened or closed; and wherein one or more circuit comprises an intermittent air line which is selectively configurable to either be closed or to redirect the fluid communication from the absorption/desorption tank, to instead recirculate into the absorption/desorption tank and/or into another absorption/desorption tank within the system.

The system comprises a plurality of air purification circuits, for example 2 or 3, 4, 5, 6, 7, 8, 9, 10, 15, 20, 30, 40, 50, or 100. Although there is no upper limit to the number of air purification circuits, for example at least 2, at least 3, at least 5, at least 10, at least 20, at least 50, or at least 100. In the context of the present invention the term "circuit" refers to a system of pipes through which air can flow, an air purification circuit must comprise a means for air purification, in this case a solid or porous absorption media.

In the context of the present invention, a "common" outlet or inlet refers to an outlet or inlet that is shared, and is therefore suitable for fluid communication with one or more air purification circuit. As would be appreciated, in the context of the present invention, an "inlet" is an opening into which air to be purified may flow. Air to be purified may enter the common foul air inlet from the atmosphere outside the system, such as the hull of a submarine, and may then flow into one or more air purification circuits to be purified. As would be appreciated, in the context of the present invention, an "outlet" is an exit out of which purified air, or a pollutant stream may flow. Purified air may flow from the absorption/desorption tank into the atmosphere outside the system, such as the hull of a submarine. Pollutants, such as CO₂, which have been removed from the air, may flow from the absorption/desorption tank into a waste storage system. Preferably, the system may further comprise a means for waste storage suitable for fluid communication with the common pollutant outlet.

The flow throughout the system, e.g. the flow of air to be purified from the inlet to the absorption/desorption tank, the flow of pollutants from the absorption/desorption tank to the common pollutant outlet, and the flow of clean air from the absorption/desorption tank to the common clean air outlet, may be provided by one or more pumps, such as pressure pumps, compression pumps, or vacuum pumps. The one or more pumps may be part of the system, or the system may take advantage of pre-existing pumps. Common pumps may be comprised within common aspects of the system, for example, the common foul air inlet may comprise a common foul air inlet pump, such as a pressure pump or compression pump; the common pollutant outlet may comprise a common pollutant outlet pump, such as a vacuum pump; and/or the common clean air outlet may comprise a common clean air outlet pump, such as a vacuum pump. Alternatively or additionally, certain pumps may be comprised within one or more air purification circuit. Any of the pumps may be reversible pumps.

Absorption: flow through mode may comprise using a pump to encourage airflow from the common foul air inlet to the absorption/desorption tank, and/or using a pump to encourage airflow from the absorption/desorption tank to the common clean air outlet, preferably wherein the flow of air from the common foul air inlet to the absorption/desorption tank is greater than the flow of air from the from the absorption/desorption tank to the common clean air outlet. This may be achieved, for example by using a pump to encourage airflow from the common foul air inlet to the absorption/desorption tank at a relatively higher rate, and using a pump to encourage airflow from the absorption/desorption tank to the common clean air outlet at a relatively lower rate. This may also be achieved, for example by applying physical restrictors to pathways with a desired lower flow, for example, partially closing a relevant valve.

Preferably, the system further comprises one or more pumps, wherein the one or more pumps are suitable for flowing air from the common foul air inlet into one or more absorption/desorption tank, from one or more absorption/desorption tank into the common pollutant outlet, and/or from one or more absorption/desorption tank into the common clean air outlet. More preferably, i) the common foul air inlet comprises a pump for flowing air from the common foul air inlet into one or more absorption/desorption tank; ii) the common pollutant outlet comprises a pump for flowing air from one or more absorption/desorption tank into the common pollutant outlet; and/or iii) the common clean air outlet comprises a pump for flowing air from one or more absorption/desorption tank into the common clean air outlet.

A valve is a device that controls the flow of fluids within a pipe system, such as an air purification circuit, by opening or closing passageways. A valve may be present within a linear passageway in which case it may be either open or close the passageway. A valve may also be present at a convergence between multiple passageways, in which case the valve may provide various configurations of where fluid communication between said passageways are opened or closed. Valves may optionally be slow opening, slow release or damped valves which release any pressure differential gradually. The use of such valves will assist with reducing system noise during mode transitions.

The absorption/desorption tank comprises a solid or porous absorption media. The solid or porous absorption media may be a CO₂ removing material, or material for removing other pollutants. The solid or porous absorption media may be a Metal-Organic Framework (MOF), a zeolite, a covalent organic framework, a polymer-based absorber, or a solid amine. For example, the solid amine may be polyethyleneimine, a melamine based resin, or amine functionalised silica. For example, the solid or porous absorption media may be a hydroxide base, such as sodium hydroxide, potassium hydroxide, lithium hydroxide, or calcium hydroxide. The absorption/desorption tank may further comprise a mechanism to encourage or disrupt airflow across or through the absorption media, for example a fan or baffles within absorption/desorption tank.

In an air purification circuit, which forms part of the system defined herein, fluid communication between the absorption/desorption tank and each one of the common foul air inlet, the common pollutant outlet, and the common clean air outlet may be achieved using by various embodiments using passageways and valves. Preferably, two separate valves are used to open/close fluid communication from the inlet to the absorption/desorption tank and from the absorption/desorption tank to the outlet.

At least one of, preferably each of the air purification circuits comprised within the system comprise an intermittent air line. The intermittent air line is capable of redirecting flow to the common outlet to instead flow back into an absorption/desorption tank. Typically, this is achieved by a shared valve which is configurable for fluid communication with the passageway from the absorption/desorption tank to the common outlet, the common outlet, and the intermittent airline. Typically, the shared exit valve is located at a convergence between the passageway from absorption/desorption tank to the common outlet, the common outlet, and the intermittent airline. In such a configuration, the shared passageway from absorption/desorption tank to the intermittent air line or the common outlet is referred to as the circuit air outlet. Typically, the shared exit valve is selectively configurable to: i) open fluid communication from the circuit air outlet to the common clean air output, and close fluid communication from the circuit air outlet to the intermittent air line; ii) close fluid communication from the circuit air outlet to the common clean air output, and open fluid communication from the circuit air outlet to the intermittent air line; or iii) close fluid communication from the circuit air outlet to the common clean air output, and close fluid communication from the circuit air outlet to the intermittent air line.

Fluid communication is possible from the absorption/desorption tank into the inlet of the intermittent air line, depending on the configuration of the relevant valve. Fluid communication is possible from the outlet of the intermittent air line to the common foul air inlet, depending on the configuration of the relevant valve. Fluid communication is then possible in turn from the common foul air inlet to the absorption/desorption tank and/or into another absorption/desorption tank within the system, depending on the configuration of the relevant valve.

The intermittent air line may connect to a foul air inlet valve of the same circuit, which also allows for fluid communication from the common foul air inlet to the absorption/desorption tank of the same circuit to be open or closed. In this case, the foul air inlet valve may also allow fluid communication from the intermittent air line to the absorption/desorption tank of the same circuit, thus the foul air inlet valve is selectively configurable to; i) open fluid communication from the common foul air inlet to the absorption/desorption tank, and close fluid communication from the intermittent air line to the absorption/desorption tank; ii) close fluid communication from the common foul air inlet to the absorption/desorption tank, and open fluid communication from the intermittent air line to the absorption/desorption tank; or iii) close fluid communication from the common foul air inlet to the absorption/desorption tank, and close fluid communication from the intermittent air line to the absorption/desorption tank.

The intermittent air line may connect to a foul air inlet valve of a different circuit, preferably an adjacent circuit, which also allows for fluid communication from the common foul air inlet to the absorption/desorption tank of the different circuit, preferably the adjacent circuit, to be open or closed. In this case, the foul air inlet valve may also allow fluid communication from the intermittent air line to the absorption/desorption tank of a different circuit, preferably an adjacent circuit, thus the foul air inlet valve is selectively configurable to; i) open fluid communication from the common foul air inlet to the absorption/desorption tank, and close fluid communication from the intermittent air line of a different circuit, preferably an adjacent circuit, to the absorption/desorption tank; ii) close fluid communication from the common foul air inlet to the absorption/desorption tank, and open fluid communication from the intermittent air line of a different circuit, preferably an adjacent circuit, to the absorption/desorption tank; or iii) close fluid communication from the common foul air inlet to the absorption/desorption tank, and close fluid communication from the intermittent air line of a different circuit, preferably an adjacent circuit, to the absorption/desorption tank.

The intermittent air line typically divides into two branches one of which is connected to a foul air inlet valve of the same circuit as described above, and the other is connected to a foul air inlet valve of a different circuit, preferably an adjacent circuit, as described above. The intermittent air line may be connected to a common air input line, which may in turn be connected to one or more inlet valve of a different circuit.

Typically, each intermittent air line comprises a pump for flowing air through the intermittent air line and/or a check valve. A pump in the intermittent air line may be activated to pump partially cleaned air from the outlet of absorption/desorption tank back to its inlet, thereby creating turbulence inside absorption/desorption tank and increasing the amount of contact between the air and the absorption media by disrupting stagnant boundary layers of air near the absorption media. As would be appreciated, a check valve enforces a one way flow of air in the desired direction. Typically, the system will comprise one or more air purification circuits in which an intermittent air line does not connect to a foul air inlet valve of a different circuit. This is because such an arrangement would not be convenient for the terminal air purification circuit in a series. However, this arrangement may be useful in a cyclical series of circuits.

In a first embodiment, one or more of, or each of, the air purification circuits comprise the following features: the absorption/desorption tank comprises: a passageway to the common foul air inlet, the passageway comprising an inlet valve; a passageway to the common pollutant outlet, the passageway comprising a pollutant outlet valve; and a passageway to the common clean air outlet, the passageway comprising an outlet valve. This arrangement allows for each passageway to be independently open or closed depending on the configuration of the valve.

In a second embodiment, one or more of, or each of, the air purification circuits comprise the following features: the absorption/desorption tank comprises: a passageway to the common foul air inlet, the passageway comprising an inlet valve; and a shared passageway that divides into a passageway to the common pollutant outlet and a passageway to the common clean air outlet. The inlet valve may be open or closed in order to open or close the passageway from the common foul air inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluid communication from the absorption/desorption tank to the common clean air outlet or to the common pollutant outlet depending on the configuration of the shared outlet valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

In a third embodiment, one or more of, or each of, the air purification circuits comprise the following features: the absorption/desorption tank comprises: a shared passageway that divides into a passageway to the common foul air inlet, the common pollutant outlet, and the common clean air outlet. The shared passageway that divides into a passageway to the common foul air inlet, a passageway to the common pollutant outlet, and a passageway to the common clean air outlet comprises a common valve at the point of convergence. The position of the common valve therefore allows fluid communication between the absorption/desorption tank to be directed to any one of the common foul air inlet, the common pollutant outlet, the common clean air outlet, or to be closed. This means that the shared section of the passageway may be used for fluid communication from the absorption/desorption tank to the common clean air outlet or to the common pollutant outlet, or may be used for fluid communication from the common foul air inlet to the absorption/desorption tank, depending on the configuration of the common valve. Thus, the common valve is selectively configurable to:
i) open fluid communication from the absorption/desorption tank to the common clean air outlet, close fluid communication from the absorption/desorption tank to the common pollutant outlet, and close fluid communication from the common foul air inlet to the absorption/desorption tank;
ii) close fluid communication from the absorption/desorption tank to the common clean air outlet, open fluid communication from the absorption/desorption tank to the common pollutant outlet, and close fluid communication from the common foul air inlet to the absorption/desorption tank;
iii) close fluid communication from the absorption/desorption tank to the common clean air outlet, close fluid communication from the absorption/desorption tank to the common pollutant outlet, and open fluid communication from the common foul air inlet to the absorption/desorption tank; or
iv) close fluid communication from the absorption/desorption tank to the common clean air outlet, close fluid communication from the absorption/desorption tank to the common pollutant outlet, and close fluid communication from the common foul air inlet to the absorption/desorption tank.

In a fourth embodiment, one or more of, or each of, the air purification circuits comprise the following features: the absorption/desorption tank comprises: a shared passageway that divides into a passageway to the common foul air inlet, and into a further shared pathway that divides into a passageway to the common pollutant outlet and a passageway to the common clean air outlet. The passageway to the common foul air inlet comprises an inlet valve. The inlet valve may be open or closed in order to open or close the passageway from the common foul air inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluid communication from the absorption/desorption tank to the common clean air outlet or to the common pollutant outlet, or may be used for fluid communication from the common foul air inlet to the absorption/desorption tank, and the further shared section of the passageway may be used for fluid communication from the absorption/desorption tank to the common clean air outlet or to the common pollutant outlet depending on the configurations of the two valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

The system of the present invention may comprise a plurality of air flow circuits, wherein each air flow circuit is an air flow circuit according to the first embodiment described above, the second embodiment described above, the third embodiment described above, or the fourth embodiment described above, alternatively a combination of these embodiments may be present. Any combination of air flow circuits using any suitable valve topology may be used.

The flow throughout the system, e.g. the flow of air to be purified from the inlet to the absorption/desorption tank, the flow of pollutants from the absorption/desorption tank to the common pollutant outlet, and the flow of clean air from the absorption/desorption tank to the common clean air outlet, may be provided by one or more pumps, such as vacuum pumps. The one or more pumps may be part of the system, or the system may take advantage of pre-existing pumps. Common pumps may be comprised within common aspects of the system, for example, the common foul air inlet may comprise a common foul air inlet pump, such as a pressure pump or compression pump; the common pollutant outlet may comprise a common pollutant outlet pump, such as a vacuum pump; and/or the common clean air outlet may comprise a common clean air outlet pump, such as a vacuum pump. Alternatively or additionally, certain pumps may be comprised within one or more air purification circuit. Any of the pumps may be reversible pumps.

In a specific example of the first embodiment, the common foul air inlet comprises a foul air input pump, the common pollutant outlet comprises a pollutant outlet pump, and the common clean air outlet comprises a clean air output pump; each absorption/desorption tank comprises a circuit air outlet; the common foul air inlet is connected to the absorption/desorption tank via a foul air inlet valve; the common pollutant outlet is connected to the absorption/desorption tank via a pollutant outlet valve; the circuit air outlet is connected to the common clean air outlet, and to an intermittent airline via an exit valve, wherein the other end of the intermittent air line is connected to the inlet valve via a check valve and an intermittent air line pump, and optionally to the inlet valve of another circuit via the intermittent air line pump; wherein the outlet valve is selectively configurable to be open or closed; wherein the exit valve is selectively configurable to:
i) open fluid communication from the circuit air outlet to the common clean air output, and close fluid communication from the circuit air outlet to the intermittent air line;
ii) close fluid communication from the circuit air outlet to the common clean air output, and open fluid communication from the circuit air outlet to the intermittent air line; or
iii) close fluid communication from the circuit air outlet to the common clean air output, and close fluid communication from the circuit air outlet to the intermittent air line;
wherein the foul air inlet valve is selectively configurable to;
i) open fluid communication from the common foul air inlet to the absorption/desorption tank, and close fluid communication from the intermittent air line to the absorption/desorption tank;
ii) close fluid communication from the common foul air inlet to the absorption/desorption tank, and open fluid communication from the intermittent air line to the absorption/desorption tank; or
iii) close fluid communication from the common foul air inlet to the absorption/desorption tank, and close fluid communication from the intermittent air line to the absorption/desorption tank.

In a specific example of either the second or fourth embodiment, the common foul air inlet comprises a foul air input pump; each absorption/desorption tank comprises a circuit air outlet; the common foul air inlet is connected to the absorption/desorption tank via a foul air inlet valve; the circuit air outlet is connected to the common clean air outlet, to the common pollutant outlet, and to the an intermittent airline each via an exit valve; the other end of the intermittent air line is connected to the inlet valve via a check valve and an intermittent air line pump, and optionally to the inlet valve of an another circuit via the intermittent air line pump; wherein the exit valve is selectively configurable to:
i) open fluid communication from the circuit air outlet to the common pollutant outlet, close fluid communication from the circuit air outlet to the common clean air output, and close fluid communication from the circuit air outlet to the intermittent air line;
ii) close fluid communication from the circuit air outlet to the common pollutant outlet, open fluid communication from the circuit air outlet to the common clean air output, and close fluid communication from the circuit air outlet to the intermittent air line;
iii) close fluid communication from the circuit air outlet to the common pollutant outlet, and close fluid communication from the circuit air outlet to the common clean air output, and open fluid communication from the circuit air outlet to the intermittent air line; or
iv) close fluid communication from the circuit air outlet to the common pollutant outlet, close fluid communication from the circuit air outlet to the common clean air output, and close fluid communication from the circuit air outlet to the intermittent air line;
wherein the foul air inlet valve is selectively configurable to;
i) open fluid communication from the common foul air inlet to the absorption/desorption tank, and close fluid communication from the intermittent air line to the absorption/desorption tank;
ii) close fluid communication from the common foul air inlet to the absorption/desorption tank, and open fluid communication from the intermittent air line to the absorption/desorption tank; or
iii) close fluid communication from the common foul air inlet to the absorption/desorption tank, and close fluid communication from the intermittent air line to the absorption/desorption tank;
wherein either: a) the common pollutant outlet comprises a pollutant outlet pump, and the common a clean air outlet comprising a clean air output pump; or b) each circuit air outlet comprises a pump.

In a specific example of the third embodiment, each absorption/desorption tank comprises a common absorption/desorption tank inlet/outlet which divides into two branches;
one branch of each common absorption/desorption tank inlet/outlet is connected to the common foul air inlet via a foul air inlet valve and a foul air input pump; the other branch of the common absorption/desorption tank inlet/outlet is connected to the common clean air outlet, to the common pollutant outlet, and to a common air input line, each via an exit valve and via a common outlet line pump; wherein the exit valve is selectively configurable to:
i) open fluid communication from the common absorption/desorption tank inlet/outlet to the common pollutant outlet, close fluid communication from the common absorption/desorption tank inlet/outlet to the common clean air output, and close fluid communication from the common absorption/desorption tank inlet/outlet to the common air input line;
ii) close fluid communication from the common absorption/desorption tank inlet/outlet to the common pollutant outlet, open fluid communication from the common absorption/desorption tank inlet/outlet to the common clean air output, and close fluid communication from the common absorption/desorption tank inlet/outlet to the common air input line;
iii) close fluid communication from the common absorption/desorption tank inlet/outlet to the common pollutant outlet, close fluid communication from the common absorption/desorption tank inlet/outlet to the common clean air output, and open fluid communication from the common absorption/desorption tank inlet/outlet to the common air input line; or
iv) close fluid communication from the common absorption/desorption tank inlet/outlet to the common pollutant outlet, close fluid communication from the common absorption/desorption tank inlet/outlet to the common clean air output, and close fluid communication from the common absorption/desorption tank inlet/outlet to the common air input line;
   the other end of each common air input line is connected to an inlet valve of another circuit in the system;
   the inlet valve is either: a) in the case that an common air input line is not connected to said inlet valve, said inlet valve is selectively configurable to be open or closed: or b) in the case that an common air input line is connected to said inlet valve, said inlet valve is selectively configurable to:
      i) open fluid communication from the common foul air inlet to the absorption/desorption tank of the other circuit, and close fluid communication from the common air input line to the absorption/desorption tank of the other circuit;
      ii) close fluid communication from the common foul air inlet to the absorption/desorption tank of the other circuit, and open fluid communication from the common air input line to the absorption/desorption tank of the other circuit; or
      iii) close fluid communication from the common foul air inlet to the absorption/desorption tank of the other circuit, and close fluid communication from the common air input line to the absorption/desorption tank of the other circuit.

Optionally, one or more of, preferably each of the absorption/desorption tanks comprise a heater and/or a cooler for heating or cooling the absorption media, for example a heat exchanger. A heat exchanger may function as either a heater or a cooler and may make use of pre-existing sources of heat or cooling on a submarine.

Optionally, one or more of, preferably each of the absorption media comprises an absorption media loading sensor configured to sense the loading of the absorption media and/or a sensor which detects or calculates pollutant loading on the selected absorption media. Optionally, one or more of, preferably each of the absorption/desorption tanks comprise a temperature sensor, an air quality sensor, and/or a pressure sensor. Optionally, the system further comprises a timer. Optionally, the system further comprises a control unit for controlling the valves and pumps. Preferably, the sensors and/or timer are configured for communication with the control unit, such that the control unit is able to switch the mode of a circuit within the system in response to input from the sensors and/or in response to by measured elapsed time.

In a second aspect, the method of removing CO₂ from air using a system as defined herein, wherein each air purification circuit is operated in one of the following modes:
i) absorption pressuring mode: wherein airflow from the absorption/desorption tank to the common pollutant outlet is closed, airflow from the absorption/desorption tank to the common clean air outlet is closed, airflow from the absorption/desorption tank to the intermittent air line is closed, and airflow from the common foul air inlet to the absorption/desorption tank is open;
ii) absorption dwell mode: wherein airflow from the absorption/desorption tank to the common pollutant outlet is closed, airflow from the absorption/desorption tank to the common clean air outlet is closed, airflow from the absorption/desorption tank to the intermittent air line is closed, airflow from the common foul air inlet to the absorption/desorption tank is closed, and wherein the pressure inside the absorption/desorption tank is higher than atmospheric pressure;
iii) absorption flow through mode: wherein airflow from the absorption/desorption tank to the common pollutant outlet is closed, airflow from the absorption/desorption tank to the common clean air outlet is open, airflow from the absorption/desorption tank to the intermittent air line is closed, and airflow from the common foul air inlet to the absorption/desorption tank is open;
iv) absorption recirculation mode: wherein airflow from the absorption/desorption tank to the common pollutant outlet is closed, airflow from the absorption/desorption tank to the common clean air outlet is closed, airflow from the absorption/desorption tank to the intermittent air line is open, and airflow from the common foul air inlet to the absorption/desorption tank is either open or closed, wherein airflow from the intermittent air line to the absorption/desorption tank of the same circuit is open, and the airflow from the intermittent air line to one or more absorption/desorption tank of other circuits is closed;
v) divert mode: wherein airflow from the absorption/desorption tank to the common pollutant outlet is closed, airflow from the absorption/desorption tank to the common clean air outlet is closed, airflow from the absorption/desorption tank to the intermittent air line is open, and airflow from the common foul air inlet to the absorption/desorption tank is either open or closed, wherein airflow from the intermittent air line to the absorption/desorption tank of the same circuit is closed, and the airflow from the intermittent air line to one or more absorption/desorption tank of other circuits is open;
vi) desorption mode: wherein airflow from the absorption/desorption tank to the common pollutant outlet is open, airflow from the absorption/desorption tank to the common clean air outlet is closed, airflow from the absorption/desorption tank to the intermittent air line is closed, and airflow from the common foul air inlet to the absorption/desorption tank is closed;
vii) clean air discharge mode: wherein airflow from the absorption/desorption tank to the common pollutant outlet is closed, airflow from the absorption/desorption tank to the common clean air outlet is open, airflow from the absorption/desorption tank to the intermittent air line is closed, and airflow from the common foul air inlet to the absorption/desorption tank is closed; or
viii) isolated mode: wherein airflow from the absorption/desorption tank to the common pollutant outlet is closed, airflow from the absorption/desorption tank to the common clean air outlet is closed, airflow from the absorption/desorption tank to the intermittent air line is closed, and airflow from the common foul air inlet to the absorption/desorption tank is closed.

The presence of the intermittent air line allows for divert mode and absorption recirculation mode to be used. Preferably, divert mode and/or absorption recirculation mode are used in response to the absorption media reaching a breakthrough point, where it is not fully exhausted but is not suitably active at removing pollutants, such as CO₂ to be able to vent clean air. This means that the partial capacity of the breakthrough absorption media can still be utilised, whilst the partially cleaned air is recirculated for further purification. This allows the full absorption capacity of the absorption media to be used before replacement or desorption is required.

Multiple circuits running different modes, with the capacity to change mode in response to the on-board atmosphere provides significant flexibility and rapid responsiveness to changing conditions on board a submarine. Hull conditions on board a submarine can change rapidly. This means that a high level of responsiveness is required in the air purification system. Divert mode allows for the running of multiple circuits within the same system to be used in series.

As would be appreciated flow through mode is only possible in circuit topologies, for example, where two separate valves are used to open/close fluid communication from the inlet to the absorption/desorption tank and from the absorption/desorption tank to the outlet, so that both of these fluid communications may be open simultaneously.

Preferably, absorption mode further comprises exposing the absorption/desorption tank to increased pressure. Increased pressure is understood to mean a pressure that is higher than the pressure outside of the system, for example, the pressure of the atmosphere in a submarine hull. Preferably, desorption mode further comprises exposing the absorption/desorption tank to reduced pressure. Reduced pressure is understood to mean a pressure that is lower than the pressure outside of the system, for example, the pressure of the atmosphere in a submarine hull. Preferably, absorption mode further comprises cooling the absorption/desorption tank. Cooling is understood to refer to reducing the temperature to lower than the temperature outside of the system, for example, the temperature of the atmosphere in a submarine hull. Preferably, desorption mode further comprises heating the absorption/desorption tank. Heating is understood to refer to increasing the temperature to a temperature that is higher than the temperature outside of the system, for example, the temperature of the atmosphere in a submarine hull. Increased or decreased pressure may be achieved for example with a pump, such as a vacuum pump, compression pump, or pressure pump. Heating or cooling may be achieved by any heating or cooling means, for example a heat exchanger, which may act as either a heating or cooling means.

In a third aspect, the present invention relates to a method of retrofitting a system as defined herein into a submarine.

For example, retrofitting a system as defined in herein into a submarine atmospheric control system may comprise connecting the system to pre-existing pumps, vacuum pumps, compression pump, pressure pumps, heating means, cooling means, and/or heat exchangers within the atmospheric control system.

In a fourth aspect, the present invention relates to a submarine comprising one or more system as defined herein.

The invention comprises one or more air purification circuits, each circuit includes an absorption/desorption tank. Each circuit can operate in one of three or more circuit modes including: *absorption* mode, where foul air has pollutants removed from it; *clean air discharge* mode, where the purified air is released; and *desorb* mode where pollutants are removed from the air purification circuit.

Absorption mode may be subdivided into (i) *absorption:pressurising* mode where foul air is pumped into the absorption/desorption tank and pressure is built up inside the absorption/desorption tank due to all exit valves being closed; (ii) *absorption:dwell* mode where foul air is isolated under pressure within the absorption/desorption tank and has pollutants removed; (iii) *absorption:flow-through* mode where foul air is pumped through an absorption/desorption tank with cleaned air exit valves open, preventing pressure build up beyond that caused by input and output pump(s); and *absorption: recirculation* mode where foul air is routed from the absorption/desorption tank exit back to its entrance to increase turbulence in the absorption/desorption tank, thereby improving contact between the foul air and the absorber.

A further mode, *divert,* allows the circuit to direct its cleaned or part-cleaned air to another circuit for further purification.

A flexible manifold system connects the individual circuits in the system allowing for multiple modes of operation at the system level. The flexible manifold system allows different air purification circuits of the system to be in different modes of operation at the same time. At a system level, circuits may operate individually or be linked in series or parallel, with all modes being available to the system at the same time, subject to a sufficient number of circuits being provided. Selection of which mode a set of circuits operates in may be made based on operational requirements, for example, the required level of air quality, crew loading, crew activity levels, need for silence.

In any of the absorption modes, the active chemistry binds or associates preferentially with CO₂ and other pollutant molecules in the air compared to nitrogen, oxygen or other air constituents. This traps and holds on to the pollutant until the absorption media is saturated and cannot bind any further pollutants By operating at high pressure, large amounts of pollutants can be bound. Optionally, the absorption media can be cooled, further enhancing its ability to absorb pollutants.

In clean air discharge mode, the air which was cleaned in absorption mode is released for use.

In desorption mode, the pressure is released, causing the bound CO₂ to desorb from the active chemistry and flow out of the system as a CO₂-enriched gas. If the pressure is reduced to normal background atmospheric pressure, some CO₂ will remain absorbed onto the absorption media. This amount of CO₂ will effectively sit on the chemistry throughout absorb/desorb cycles as a spectator species. This represents a significant loss of real active chemistry that is not working towards CO₂ removal.

Applying a vacuum, and optionally heat, during the desorb cycle creates a further driving force for CO₂ molecules to leave the active chemistry, meaning that a greater proportion of CO₂ is released and effective absorption media capacity is increased for the next cycle. If effective absorption media capacity is increased, then a system can be reduced in size for the same workload of CO₂ scrubbing, saving cost, energy and system volume.

In addition, application of a vacuum during the desorb cycle will also help to remove unwanted species that are bound to the active chemistry. For example, water molecules in the incoming air stream may bind to absorption sites, limiting capacity for CO₂ absorption. These unwanted molecules can then persist throughout the absorption/desorption cycles reducing capacity for multiple system cycles. This may be a progressive effect, where active capacity continues to reduce throughout successive cycles. Application of a vacuum allows for the removal of these unwanted molecules, refreshing absorption media capacity.

Vacuum pumps can be large, noisy and inefficient. Utilisation of the vacuum system already present and running on a submarine makes use of this resource without adding any additional cost, volume or energy burden onto the scrubber system. This is an advantage available to CO₂ removal systems on submarines that is not available to CO₂ scrubbers in other applications.

All system embodiments may include optional sensors in the absorption/desorption tank including sensors for air quality and air pressure, and an optional sensor which detects or calculates pollutant loading on the selected absorption media. These sensors are used to control the system operation either directly or in combination with a control unit.

As well as the use of pressure and vacuum to optimise absorption media loading / unloading, some embodiments may employ an optional heat exchanger to also improve the efficient operation of the absorption media.

Whilst the primary use of this system is for CO₂ removal from air, it may be used to remove other pollutants, together these other pollutants and CO₂ are henceforth referred to as "pollutants". The invention will now be described with reference to the figures. The figures represent non-limiting examples of the present invention.

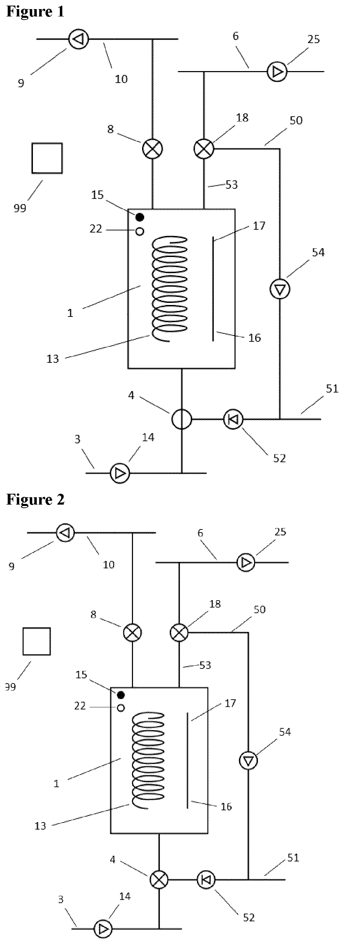

Figure 1 shows a single air purification circuit of a first embodiment in absorption:pressurising mode. Absorption/desorption tank (1) includes a solid or porous absorption media (16), for example, but not limited to Metal-organic Frameworks (MOFs) or Solid Amines. Foul air containing CO₂ and / or other pollutants (together: pollutants) enters via foul air inlet (3), assisted by foul air input pump (14); foul air inlet valve (4) is open to the airflow and exit valves (8, 18) are closed to the airflow, causing the foul air to become pressurised in absorption/desorption tank (1) where pollutants are removed by absorption media (16). Optional heat exchanger (13) may be used to cool the absorption media (16) or foul air in order to increase absorption efficiency.
Figure 2 shows the single air purification circuit from Figure 1 in absorption:dwell mode. After foul air has been pumped into absorption/desorption tank under pressure, foul air inlet valve (4) is sealed, maintaining the pressure in absorption/desorption tank (1). Pressure is maintained until either pollutant levels fall below a specific level or a specific amount of time has passed.

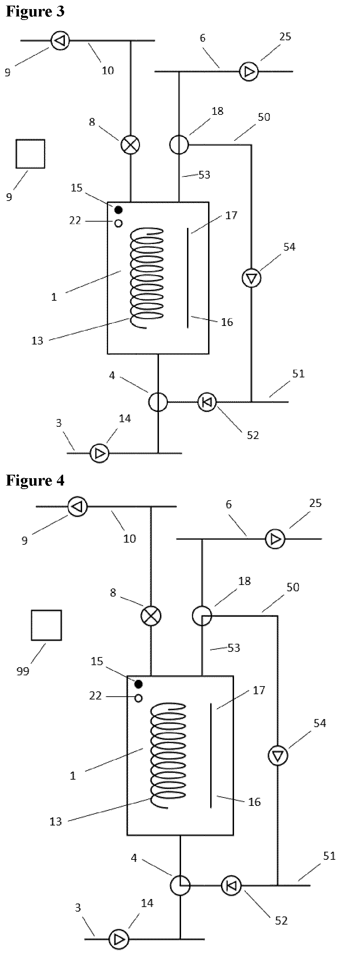

Figure 3 shows the embodiment from Figure 1 in absorption:flow-through mode. Foul air inlet valve (4) is opened to connect foul air inlet (3) to absorption/desorption tank (1) and multipurpose valve (18) is opened to connect absorption/desorption tank to clean air output (6) via circuit air outlet (53). Foul air input pump (14) pumps foul air into absorption/desorption tank (1). Clean air output pump (25) pumps cleaned air from absorption/desorption tank (1) to clean air output (6) via circuit air outlet (53). Foul air input pump (14) and clean air outlet pump (25) may operate at the same rate providing flow-through. Alternatively, foul air input pump (14) and clean air outlet pump (25) may operate at different rates or pumping patterns to create high or low pressure, or pressure fluctuations, inside absorption/desorption tank (1).
Figure 4 shows the embodiment from Figure 1 in absorption:recirculation mode. Foul air inlet valve (4) connects common input air line (51) to absorption/desorption tank (1) and multipurpose valve (18) connects absorption/desorption tank (1) to intermittent air line (50) via circuit air outlet (53). Intermittent air line pump (54) is activated to pump partially cleaned air from the outlet of absorption/desorption tank (1) back to its inlet, thereby creating turbulence inside absorption/desorption tank (1) and increasing the amount of contact between the air and the absorption media (16). Check valve (52) prevents back pressure from absorption/desorption tank (1) into common input air line (51).

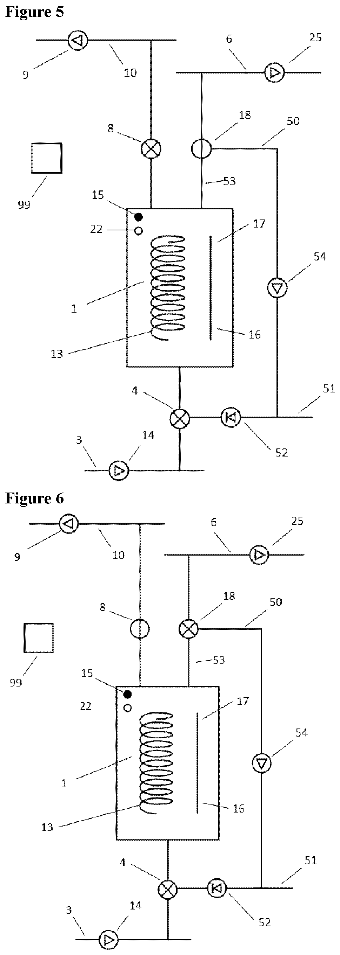

Figure 5 shows the embodiment from Figure 1 in clean air discharge mode. Foul air inlet valve (4) is closed preventing the ingress of foul air. Multipurpose valve (18) connects circuit air outlet (53) with clean air outlet (6). Clean air outlet pump (25) is activated to pump clean air from absorption/desorption tank (1) to clean air outlet (6). Pumping stops after a specific amount of time or when a threshold pressure is reached; this threshold pressure will be above the pressure needed for the absorber to begin desorbing.
Figure 6 shows the embodiment from Figure 1 in desorb mode. Foul air input pump (14) is deactivated and foul air inlet valve (4) is closed to prevent desorbed pollutants entering the foul air input stream. Multipurpose valve (18) is closed and clean air pump (25) is stopped. Pollutant outlet valve (8) is opened and pollutant pump (9) is activated creating a vacuum in absorption/desorption tank (1) which enhances desorption; extracted pollutants exit absorption/desorption tank (1), pass through pollutant outlet valve (8) and exit the system via pollutant outlet (10). Optional heat exchanger (13) may heat the absorption media (16) in order to enhance desorption.

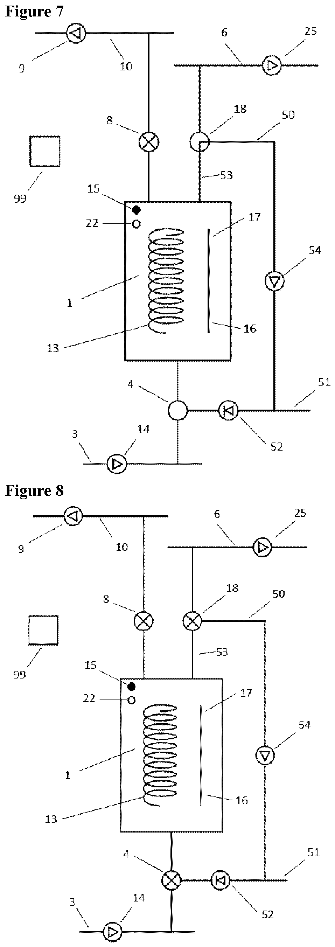

Figure 7 shows the embodiment from Figure 1 in divert mode. Multipurpose valve (18) connects absorption/desorption tank (1) to intermittent air line (50). Intermittent air line pump (54) is activated to pump cleaned or partially cleaned air from the exit of absorption/desorption tank (1) to common input air line (51) for processing by another air purification circuit. Foul air inlet valve (4, shown in a neutral state) may seal absorption/desorption tank (1) or allow passage of further foul air from foul air inlet (3) to absorption/desorption tank (1), depending on the operating mode of the circuit.
Figure 8 shows the embodiment from Figure 1 in isolated mode. Foul air inlet valve (4), multipurpose valve (18) and pollutant outlet valve (8) are all closed, thereby isolating the absorption/desorption tank (1) from the remainder of the system. This mode may be used when a reduced system capacity is required or for circuit maintenance. Valve settings for isolated mode are the same as for absorption:dwell mode, however the absorption/desorption tank (1) is not pressurised when the circuit is in isolated mode.

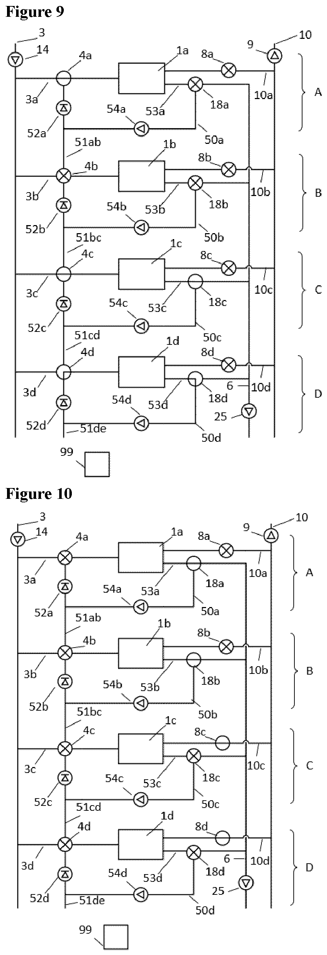

Figures 9 - 12 show examples of four interconnected air purification circuits (a, b, c, d) of the embodiment shown in Figure 1. For simplicity, the internal elements of the absorption/desorption tanks (1a, 1b, 1c, 1d) are not shown. The number of circuits in these figures and their corresponding operational modes should be regarded as illustrative and not limiting; for example, topologies including any number of circuits are possible and the operating mode of each circuit is independent of any of the others. In the illustrated embodiments, there is one foul air input pump (14), one clean air outlet pump (25) and one pollutant pump (9) for the system; other pump topologies are possible, including circuit-specific pumps and a mixture of circuit-specific and shared pumps at the system level.
Figure 9 shows an example of four interconnected air purification circuits (a, b, c, d) of the embodiment shown in Figure 1. The a-circuit is in absorption:pressurising mode, the b-circuit is in absorption:dwell mode, the c-circuit is in absorption:flow-through mode and the d-circuit is in absorption:recirculation mode. This mixing of operational modes demonstrates the flexibility of the proposed manifold system.

For the a-circuit, which is in absorption:pressurising mode, foul air inlet valve (4a) is set to allow foul air to be pumped into absorption/desorption tank (1a), pollutant outlet valve (8a) and multipurpose valve (18a) are closed allowing foul air input pump (14) to pressurise foul air in absorption/desorption tank (1a).

For the b-circuit, which is in absorption:dwell mode, absorption/desorption tank (1b) has been pressurised with foul air. All valves (4b, 8b, 18b) are closed, ensuring pressure is maintained during the dwell period.

For the c-circuit, which is in absorption:flow-through mode, foul air inlet valve (4c) is opened to connect foul air inlet (3, 3c) to absorption/desorption tank (1c) and multipurpose valve (18c) is opened to connect absorption/desorption tank to clean air output (6) via circuit air outlet (53c). Foul air input pump (14) pumps foul air into absorption/desorption tank (1c). Clean air output pump (25) pumps cleaned air from absorption/desorption tank (1c) to clean air output (6) via circuit air outlet (53c). Foul air input pump (14) and clean air outlet pump (25) may operate at the same rate providing flow-through. Alternatively, foul air input pump (14) and clean air outlet pump (25) may operate at different rates or pumping patterns to create high or low pressure, or pressure fluctuations, inside absorption/desorption tank (1).

For the d-circuit, which is in absorption:recirculation mode, foul air inlet valve (4d) connects intermittent air line (50d) to the foul air input of absorption/desorption tank (1d) and multipurpose valve (18d) connects absorption/desorption tank circuit air outlet (53d) to intermittent air line (50d). Intermittent air line pump (54d) is activated to pump partially cleaned air from the outlet of absorption/desorption tank (1d) back to its inlet, thereby creating turbulence inside absorption/desorption tank (1d) and increasing the amount of contact between the air and the absorption media. Check valve (52d) prevents back pressure from absorption/desorption tank (1d) into common input airline (51de).

Figure 10 shows four interconnected circuits (a, b, c and d) of the embodiment from Figure 1. The a-circuit and b-circuit are in clean air discharge mode, the c-circuit and d-circuit are in desorb mode.

For the a-circuit and b-circuit, which are both in clean air discharge mode, foul air inlet valves (4a, 4b) are closed, preventing foul air from entering the absorption/desorption tanks (1a, 1b). Pollutant outlet valves (8a, 8b) are closed. Multipurpose valves (18a, 18b) are opened to allow cleaned air to flow from absorption/desorption tank (1a, 1b) to circuit air outlet (53a, 53b) and then to clean air outlet (6), assisted by clean air outlet pump (25).

For the c-circuit and d-circuit, which are both in desorb mode, foul air inlet valves (4c, 4d) are closed to prevent desorbed pollutants entering the foul air input stream. Multipurpose valves (18c, 18d) are closed and pollutant outlet valves (8c, 8d) are opened and pollutant pump (9) is activated creating a vacuum in absorption/desorption tanks (1c, 1d) which enhances desorption; extracted pollutants exit absorption/desorption tank (1c, 1d), pass through pollutant outlet valve (8c, 8d) and exit the system via pollutant outlets (10c, 10d, 10).

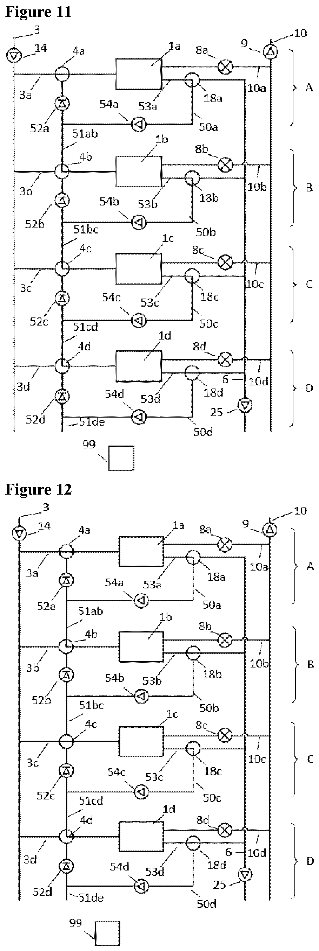

Figure 11 shows four interconnected circuits (a, b, c and d) of the embodiment from Figure 1 with valve and pump settings providing series operation of the four circuits. All pollutant outlet valves (8a, 8b, 8c, 8d) are closed. Foul air inlet valve (4a) is set to allow foul air to flow from foul air inlet (3) into absorption/desorption tank (1a). Multipurpose valves (18a, 18b, 18c) are set to allow air to flow from their corresponding absorption/desorption tank (1a, 1b, 1c) to intermittent air line (50a, 50b, 50c). Foul air inlet valves (4b, 4c, 4d) are set to allow air to flow from intermittent air line (50a, 50b, 50c) to common air input lines (51ab, 51bc, 51cd) and thereby to the next absorption/desorption tank in series, aided by intermittent air line pumps (54a, 54b, 54c). The d-circuit has multipurpose valve (18d) connecting circuit air outlet (53d) to clean air outlet (6), thereby making the cleaned air available for use.

Figure 11 shows the series circuits operating in absorption:flow-through mode. Other modes of operation are possible, including pressurised circuits working in series, whereby an individual circuit is pressurised, the air within the absorption/desorption tank is part-cleaned and then the part-cleaned air is passed to the next circuit in series. Absorption:dwell and absorption:recirculation modes may also be employed by one or more circuits before passing the part-cleaned air to the next circuit in series.

The use of air purification circuits in series may allow for increased purification levels and may also allow for different absorbers to be used in different absorption/desorption tanks, with specific absorbers having different purposes.

Figure 12 shows four interconnected circuits (a, b, c and d) of the embodiment from Figure 1. The a-circuit and b-circuit are working in series, the c-circuit and d-circuit are working in series. Both pairs of circuit are working in parallel. All pollutant outlet valves (8a, 8b, 8c, 8d) are closed. Foul air inlet valves (4a, 4c) are set to allow foul air to flow from foul air inlets (3, 3a, 3c) into the corresponding first absorption/desorption tank (1a, 1c) in the series. Multipurpose valves (18a, 18c) are set to allow air to flow from their corresponding absorption/desorption tank (1a, 1c) to intermittent air line (50a, 50c). Foul air inlet valves (4b, 4d) are set to allow air to flow from intermittent air line (50a, 50c) to common air input lines (51ab, 51cd) and thereby to the next absorption/desorption tank in series (1b, 1d), aided by intermittent air line pumps (54a, 54c). Multipurpose valves (18b, 18d) are opened to allow cleaned air to flow from the corresponding absorption/desorption tank (1b, 1d) to clean air outlet (6), assisted by clean air outlet pump (25).

Figure 12 shows the series circuits operating in absorption:flow-through mode. Other modes of operation are possible, including pressurised circuits working in series, whereby an individual circuit is pressurised, the air within the absorption/desorption tank is part-cleaned and then the part-cleaned air is passed to the next circuit in series. Absorption:dwell and absorption:recirculation modes may also be employed by one or more circuits before passing the part-cleaned air to the next circuit in series.

Mixing series and parallel circuit operation in this manner can be used to balance air quality and throughput requirements.

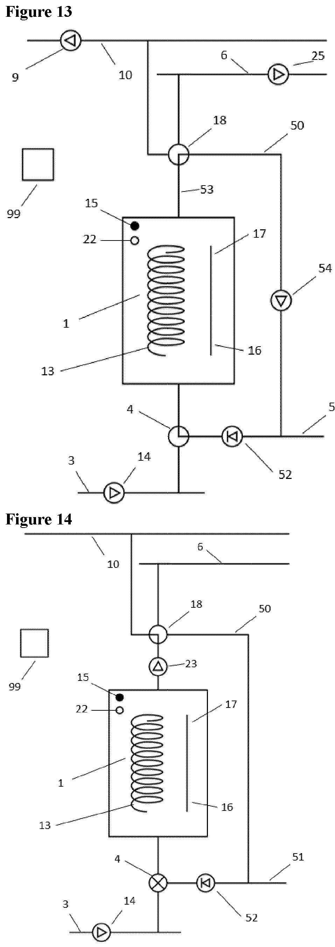

Figure 13 shows an alternative embodiment of a single air purification circuit, in absorption:recirculation mode, which uses a common outlet for clean air, part cleaned air and discharged pollutants, thereby reducing part count, installation complexity, space requirements and capital cost. Multipurpose valve (18) has four positions: closed, open to clean air outlet (6), open to pollutant outlet (10) and open to intermittent air line (50). In absorption:pressurising mode, foul air inlet valve (4) is open and foul air enters via foul air inlet (3) and is pressurised in absorption/desorption tank (1) by foul air input pump (14). Multipurpose valve (18) is closed, ensuring pressure build up within absorption/desorption tank (1). Absorption: dwell mode may be activated after absorption:pressurising mode, if this done, foul air inlet valve (4) is closed allowing foul air to dwell within absorption/desorption tank (1) and have its pollutants removed. In absorption:flow-through mode, foul air input valve (4) is opened and foul air enters via foul air inlet (3), multipurpose valve (18) is opened to allow cleaned air to flow from absorption/desorption tank circuit air outlet (53) to clean air outlet (6), assisted by clean air outlet pump (25). In absorption:recirculation mode (shown), foul air inlet valve (4) connects common input air line (51) to absorption/desorption tank (1) and multipurpose valve (18) connects absorption/desorption tank circuit air outlet (53) to intermittent air line (50). Intermittent air line pump (54) is activated to pump partially cleaned air from the exit of absorption/desorption tank (1) back to its entrance, thereby creating turbulence inside absorption/desorption tank (1) and increasing the amount of contact between the air and the absorption media (16). Check valve (52) prevents back pressure from absorption/desorption tank (1) into common input air line (51).

In clean air discharge mode, foul air inlet valve (4) is closed and foul air input pump (14) is deactivated, preventing the exit of clean air through foul air inlet (3); valve (18) is opened to allow the pressurised clean air to exit via clean air outlet (6), assisted by clean air outlet pump (25). Pumping stops after a specific amount of time or when a threshold pressure is reached; this threshold pressure will be above the pressure needed for the absorber to begin desorbing.

In desorb mode, foul air inlet valve (4) is closed and foul air input pump (14) is deactivated, preventing the exit of pollutants through foul air inlet (3); multipurpose valve (18) is opened to allow pollutants to exit via pollutant outlet (10); pollutant pump (9) is activated creating a vacuum in absorption/desorption tank (1) which enhances desorption; extracted pollutants exit absorption/desorption tank (1), pass through multipurpose valve (18) and exit the system via pollutant outlet (10).

Figure 14 shows a variation of the embodiment of the single air purification circuit from Figure 13 with the shared pollutant pump, shared clean air outlet pump and circuit-specific intermittent air line pump replaced with vacuum pump (23). Absorption:pressurising mode and absorption:dwell mode are the same as set out for Figure 13. In absorption:flow-through mode, foul air input valve (4) is opened and foul air enters via foul air inlet (3), multipurpose valve (18) is opened to allow cleaned air to flow from absorption/desorption tank (1) to clean air outlet (6), assisted by vacuum pump (23). In absorption:recirculation mode, foul air inlet valve (4) connects common input air line (51) to absorption/desorption tank (1) and multipurpose valve (18) connects absorption/desorption tank (1) to intermittent air line (50). Vacuum pump (23) is activated to pump partially cleaned air from the exit of absorption/desorption tank (1) back to its entrance, thereby creating turbulence inside absorption/desorption tank (1) and increasing the amount of contact between the air and the absorption media (16).

In clean air discharge mode, foul air inlet valve (4) is closed and foul air input pump (14) is deactivated, preventing the exit of clean air through foul air inlet (3); valve (18) is opened to allow the pressurised clean air to exit via clean air outlet (6), assisted by vacuum pump (23). In desorb mode (shown), foul air inlet valve (4) is closed and foul air input pump (14) is deactivated, preventing the exit of pollutants through foul air inlet (3); multipurpose valve (18) is opened to allow pollutants to exit via pollutant outlet (10); vacuum pump (23) is activated creating a vacuum in absorption/desorption tank (1) which enhances desorption; extracted pollutants exit absorption/desorption tank (1), pass through multipurpose valve (18) and exit the system via pollutant outlet (10).

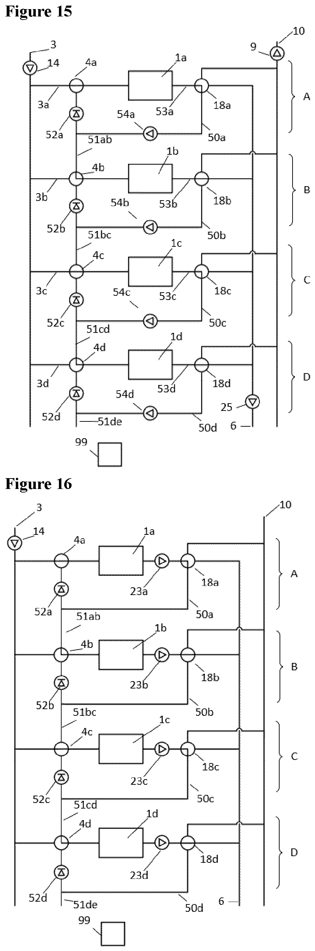

Figures 15 - 16 show examples of four interconnected air purification circuits (a, b, c, d) of the embodiments shown in Figures 13 or 14. For simplicity, the internal elements of the absorption/desorption tanks (1a, 1b, 1c, 1d) are not shown. The number of circuits in these figures and their corresponding operational modes should be regarded as illustrative and not limiting; for example, topologies including any number of circuits are possible and the operating mode of each circuit is independent of any of the others.

Figure 15 shows an example of four interconnected air purification circuits (a, b, c, d) of the embodiment shown in Figure 13. The a-circuit and b-circuit are working in series, the c-circuit and d-circuit are working in series. Both pairs of circuits are working in parallel. Foul air inlet valves (4a, 4c) are set to allow foul air to flow from foul air inlets (3, 3a, 3c) into the corresponding first absorption/desorption tank (1a, 1c) in the series. Multipurpose valves (18a, 18c) are set to allow air to flow from their corresponding absorption/desorption tank (1a, 1c) to intermittent air line (50a, 50c). Foul air inlet valves (4b, 4d) are set to allow air to flow from intermittent air line (50a, 50c) to common air input lines (51ab, 51cd) and thereby to the next absorption/desorption tank in series (1b, 1d), aided by intermittent air line pumps (54a, 54c). Multipurpose valves (18b, 18d) are opened to allow cleaned air to flow from the corresponding absorption/desorption tank (1b, 1d) to clean air outlet (6), assisted by clean air outlet pump (25).

Figure 16 shows an example of four interconnected air purification circuits (a, b, c, d) of the embodiment shown in Figure 14. The a-circuit and b-circuit are working in series, the c-circuit and d-circuit are working in series. Both pairs of circuits are working in parallel. Foul air inlet valves (4a, 4c) are set to allow foul air to flow from foul air inlets (3, 3a, 3c) into the corresponding first absorption/desorption tank (1a, 1c) in the series. Multipurpose valves (18a, 18c) are set to allow air to flow from their corresponding absorption/desorption tank (1a, 1c) to intermittent air line (50a, 50c), assisted by vacuum pumps (23a, 23c). Foul air inlet valves (4b, 4d) are set to allow air to flow from intermittent air line (50a, 50c) to common air input lines (51ab, 51cd) and thereby to the next absorption/desorption tank in series (1b, 1d). Multipurpose valves (18b, 18d) are opened to allow cleaned air to flow from the corresponding absorption/desorption tank (1b, 1d) to clean air outlet (6), assisted by vacuum pumps (23b, 23d).

Figures 15 and 16 show the series circuits operating in absorption:flow-through mode. Other modes of operation are possible, including pressurised circuits working in series, whereby an individual circuit is pressurised, the air within the absorption/desorption tank is part-cleaned and then the part-cleaned air is passed to the next circuit in series. Absorption:dwell and absorption:recirculation modes may also be employed by one or more circuits before passing the part-cleaned air to the next circuit in series.

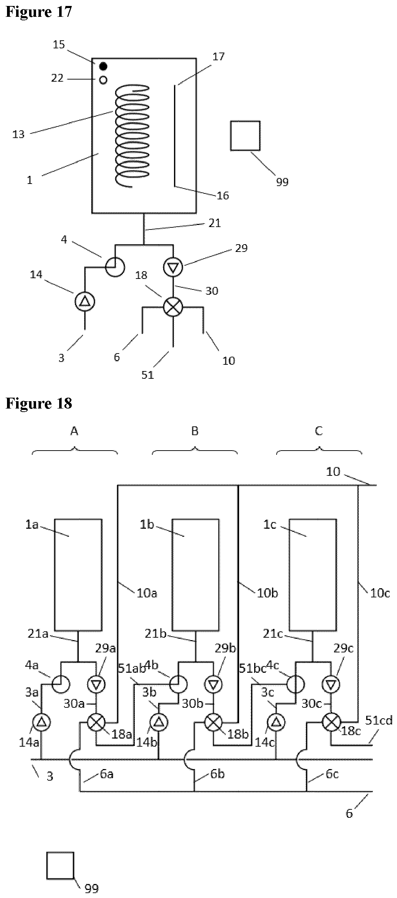

Figure 17 shows a further alternative embodiment of a single air purification circuit. This circuit has a common absorption/desorption tank inlet/outlet (21); this reduces system part count but will limit the operating modes of the circuit, specifically absorption:flow-through and absorption:recirculation modes are not available with this layout. The circuit show is in absorption:pressurising mode, with foul air inlet valve (4) open to allow foul air to be pumped from foul air inlet (3) to absorption/desorption tank (1) by foul air inlet pump (4). Multipurpose valve (18) is sealed, allowing pressure to build up in absorption/desorption tank (1). Multipurpose valve (18) has four positions: sealed (shown); open to connect common outlet line (30) to clean air outlet (6); open to connect common outlet line (30) to common input air line (51); and open to connect common outlet line (30) to pollutant outlet (10), via common outlet line pump (29).

Figure 18 shows an example of three interconnected air purification circuits (a, b, c) of the embodiment shown in Figure 17. The a-circuit is in absorption:pressurising mode; the b-circuit is awaiting part-cleaned air from the a-circuit. The c-circuit is in absorption:pressurising mode. For serial operation of the a and b circuits, once the a-circuit is fully pressurised, foul air inlet valve (4a) is closed and pressure is maintained until a target level of absorption or time threshold has been reached. Once this threshold has been reached, multipurpose valve (18a) opens to connect a-circuit absorption/desorption tank (1a) to b-circuit absorption/desorption tank (1b) via common outline line (30a) and common input air line (51ab). Air is then pumped from absorption/desorption tank (1a) to absorption/desorption tank (1b) by vacuum pump (29a).

In all embodiments, where pump and valve pairs are shown in a specific order (e.g., pump before valve, pump after valve), this order is illustrative only and alternative embodiments allow for the order to be reversed. In all embodiments, where pump and valve pairs are shown, a pump and valve pair may be replaced by combined pump and valve device. In all embodiments, where a valve with more than a single input and output is shown, such a valve may be replaced with a combination of valves which can achieve the same switching effect. In all embodiments, absorption media (16) may include optional absorption media loading sensor (17) which senses the loading of the absorption media. During absorption, optional absorption media loading sensor (17) can monitor the pollutant loading of the absorption media; when this sensor detects that there is insufficient absorption capacity for an additional absorption cycle, the circuit switches to desorption mode. During desorption, optional absorption media loading sensor (17) may monitor the pollutant loading of absorption media (16) and determine when to switch back to absorption mode. In all embodiments, during absorption, optional air quality sensor (15) may monitor the level of pollutants in the pressurised air; once this level reaches a target level, the circuit may switch to an alternative mode such as clean air discharge mode or may pass its cleaned/part-cleaned air to another circuit for further purification. In all embodiments, during absorption, optional heat exchanger (13) may cool the absorption media (16) or foul air in order to increase its loading efficiency. During desorption, optional heat exchanger (13) may heat the absorption media (16) in order to enhance desorption. Optionally a mechanism to encourage airflow across or through the absorption media (16) may be included, for example a fan or baffles within absorption/desorption tank (1).

For all embodiments, optional pressure sensor (22) either directly or via control unit (99) may be used to manage the absorption/desorption tank (1) pressure. During absorption, pressure sensor (22) may prevent over-pressurisation; when a threshold pressure is reached, foul air inlet valve (4) or common valve (19) is closed and foul air input pump (14) or common pump (20) is shut off; the foul air will then dwell, at pressure in absorption/desorption tank (1) while pollutants are removed. In clean air discharge mode, pressure sensor (22) may monitor pressure to ensure that absorption/desorption tank (1) pressure does not fall to the level at which pollutants will desorb from the absorption media (16). Once this pressure is neared, the system will transition to absorption mode or desorption mode; the decision on which mode to transition to may be made based on absorption media loading, number of cycles processed by the absorption media, elapsed absorption time or other means. In all embodiments, there may be an optional dwell stage during absorption mode. In this dwell stage, absorption/desorption tank (1) is filled with pressurised foul air, all valves into and out from absorption/desorption tank (1) are sealed and the absorption media (16) absorbs the pollutant from this air. Optionally, a mechanism to encourage airflow across or through the absorption media (16) is used to optimise contact between the foul air and the absorption media. Determination of when to switch to clean air discharge mode may be done by measured elapsed time or through the use of optional air quality sensor (15). In all embodiments, switching between modes may be triggered by the aforementioned sensors, by time-based mechanisms or similar. Valve and pump actuation for mode switching may be achieved by computational, electrical or mechanical means, without additional control mechanisms or may be coordinated using optional control unit (99). In all embodiments, the valves may optionally be slow opening, slow release or damped valves which release any pressure differential gradually. The use of such valves will assist with reducing system noise during mode transitions. In all embodiments, optionally the pressure differentials between modes during mode transitions may be used to increase overall system efficiency. For example, during transition from absorption mode to clean air discharge mode, the high pressure in absorption/desorption tank (1) may be used to assist venting of clean air to the clean air outlet (6). For example, during transition from desorption mode to absorption mode, the low pressure in absorption/desorption tank (1) may be used to assist foul air entry into absorption/desorption tank (1) via foul air inlet (3).

## Claims

1. A system comprising one or more air purification circuits, the system comprising:
a common pollutant outlet (10), a common clean air outlet (6); and a common foul air inlet (3);
wherein each circuit comprises an absorption/desorption tank (1) comprising a solid or porous absorption media (16);
wherein each circuit comprises one or more valves (4, 8, 18) which allow fluid communication between the absorption/desorption tank (1) and each one of the common foul air inlet (3), the common pollutant outlet (10), and the common clean air outlet (6) to be either opened or closed; and
wherein one or more circuit comprises an intermittent air line (50) which is selectively configurable to either be closed or to redirect the fluid communication from the absorption/desorption tank (1) to instead recirculate into the absorption/desorption tank (1) and/or into another absorption/desorption tank (1) within the system.

2. The system of Claim 1, further comprising one or more pumps, wherein the one or more pumps are suitable for flowing air from the common foul air inlet (3) into one or more absorption/desorption tank (1), from the one or more absorption/desorption tank (1) into the common pollutant outlet (10), and/or from the one or more absorption/desorption tank (1) into the common clean air outlet (6).

3. The system of Claim 2, wherein:
i) the common foul air inlet (3) comprises a pump for flowing air from the common foul air inlet (3) into one or more absorption/desorption tank (1);
ii) the common pollutant outlet (10) comprises a pump for flowing air from one or more absorption/desorption tank (1) into the common pollutant outlet (10); and/or
iii) the common clean air outlet (6) comprises a pump for flowing air from one or more absorption/desorption tank (1) into the common clean air outlet (6).

4. The system of any one of the preceding claims, wherein each intermittent air line (50) comprises a pump (54) for flowing air through the intermittent air line (50), and/or wherein each intermittent air line (50) comprises a check valve (52).

5. The system of Claim 1, wherein:
the common foul air inlet (3) comprises a foul air input pump (14), the common pollutant outlet (10) comprises a pollutant outlet pump (9), and the common clean air outlet (6) comprises a clean air output pump (25);
each absorption/desorption tank (1) comprises a circuit air outlet (53);
the common foul air inlet (3) is connected to the absorption/desorption tank (1) via a foul air inlet valve (4);
the common pollutant outlet (10) is connected to the absorption/desorption tank (1) via a pollutant outlet valve (8);
the circuit air outlet (53) is connected to the common clean air outlet (6), and to an intermittent airline (50) via an exit valve (18), wherein the other end of the intermittent air line (50) is connected to the inlet valve (4) via a check valve (52) and an intermittent air line pump (54), and optionally to the inlet valve (4) of another circuit via the intermittent air line pump (54);
wherein the outlet valve (8) is selectively configurable to be open or closed;
wherein the exit valve (18) is selectively configurable to:
i) open fluid communication from the circuit air outlet (53) to the common clean air output (6), and close fluid communication from the circuit air outlet (53) to the intermittent air line (50);
ii) close fluid communication from the circuit air outlet (53) to the common clean air output (6), and open fluid communication from the circuit air outlet (53) to the intermittent air line (50); or
iii) close fluid communication from the circuit air outlet (53) to the common clean air output (6), and close fluid communication from the circuit air outlet (53) to the intermittent air line (50);
wherein the foul air inlet valve (4) is selectively configurable to;
i) open fluid communication from the common foul air inlet (3) to the absorption/desorption tank (1), and close fluid communication from the intermittent air line (50) to the absorption/desorption tank (1);
ii) close fluid communication from the common foul air inlet (3) to the absorption/desorption tank (1), and open fluid communication from the intermittent air line (50) to the absorption/desorption tank (1); or
iii) close fluid communication from the common foul air inlet (3) to the absorption/desorption tank (1), and close fluid communication from the intermittent air line (50) to the absorption/desorption tank (1).

6. The system of Claim 1, wherein:
the common foul air inlet (3) comprises a foul air input pump (14);
each absorption/desorption tank (1) comprises a circuit air outlet (53);
the common foul air inlet (3) is connected to the absorption/desorption tank (1) via a foul air inlet valve (4);
the circuit air outlet (53) is connected to the common clean air outlet (6), to the common pollutant outlet (10), and to the an intermittent air line (50) each via an exit valve (18);
the other end of the intermittent air line (50) is connected to the inlet valve (4) via a check valve (52) and an intermittent air line pump (54), and optionally to the inlet valve (4) of an another circuit via the intermittent air line pump (54);
wherein the exit valve (18) is selectively configurable to:
i) open fluid communication from the circuit air outlet (53) to the common pollutant outlet (10), close fluid communication from the circuit air outlet (53) to the common clean air output (6), and close fluid communication from the circuit air outlet (53) to the intermittent air line (50);
ii) close fluid communication from the circuit air outlet (53) to the common pollutant outlet (10), open fluid communication from the circuit air outlet (53) to the common clean air output (6), and close fluid communication from the circuit air outlet (53) to the intermittent air line (50);
iii) close fluid communication from the circuit air outlet (53) to the common pollutant outlet (10), and close fluid communication from the circuit air outlet (53) to the common clean air output (6), and open fluid communication from the circuit air outlet (53) to the intermittent air line (50); or
iv) close fluid communication from the circuit air outlet (53) to the common pollutant outlet (10), close fluid communication from the circuit air outlet (53) to the common clean air output (6), and close fluid communication from the circuit air outlet (53) to the intermittent air line (50);
wherein the foul air inlet valve (4) is selectively configurable to;
i) open fluid communication from the common foul air inlet (3) to the absorption/desorption tank (1), and close fluid communication from the intermittent air line (50) to the absorption/desorption tank (1);
ii) close fluid communication from the common foul air inlet (3) to the absorption/desorption tank (1), and open fluid communication from the intermittent air line (50) to the absorption/desorption tank (1); or
iii) close fluid communication from the common foul air inlet (3) to the absorption/desorption tank (1), and close fluid communication from the intermittent air line (50) to the absorption/desorption tank (1);
wherein either:
a) the common pollutant outlet (10) comprises a pollutant outlet pump (9), and the common a clean air outlet (6) comprises a clean air output pump (25); or
b) each circuit air outlet (53) comprises a pump (23).

7. The system of Claim 1, wherein:
each absorption/desorption tank (1) comprises a common absorption/desorption tank inlet/outlet (21) which divides into two branches;
one branch of each common absorption/desorption tank inlet/outlet (21) is connected to the common foul air inlet (3) via a foul air inlet valve (4) and a foul air input pump (14);
the other branch of the common absorption/desorption tank inlet/outlet (21) is connected to the common clean air outlet (6), to the common pollutant outlet (10), and to a common air input line (51), each via an exit valve (18) and via a common outlet line pump (29);
wherein the exit valve (18) is selectively configurable to:
i) open fluid communication from the common absorption/desorption tank inlet/outlet (21) to the common pollutant outlet (10), close fluid communication from the common absorption/desorption tank inlet/outlet (21) to the common clean air output (6), and close fluid communication from the common absorption/desorption tank inlet/outlet (21) to the common air input line (51);
ii) close fluid communication from the common absorption/desorption tank inlet/outlet (21) to the common pollutant outlet (10), open fluid communication from the common absorption/desorption tank inlet/outlet (21) to the common clean air output (6), and close fluid communication from the common absorption/desorption tank inlet/outlet (21) to the common air input line (51);
iii) close fluid communication from the common absorption/desorption tank inlet/outlet (21) to the common pollutant outlet (10), close fluid communication from the common absorption/desorption tank inlet/outlet (21) to the common clean air output (6), and open fluid communication from the common absorption/desorption tank inlet/outlet (21) to the common air input line (51); or
iv) close fluid communication from the common absorption/desorption tank inlet/outlet (21) to the common pollutant outlet (10), close fluid communication from the common absorption/desorption tank inlet/outlet (21) to the common clean air output (6), and close fluid communication from the common absorption/desorption tank inlet/outlet (21) to the common air input line (51);
the other end of each common air input line (51) is connected to an inlet valve (4) of another circuit in the system;
the inlet valve (4) is either: a) in the case that the common air input line (51) is not connected to said inlet valve (4), said inlet valve (4) is selectively configurable to be open or closed: or b) in the case that the common air input line (51) is connected to said inlet valve (4), said inlet valve (4) is selectively configurable to:
i) open fluid communication from the common foul air inlet (3) to the absorption/desorption tank (1) of the other circuit, and close fluid communication from the common air input line (51) to the absorption/desorption tank (1) of the other circuit;
ii) close fluid communication from the common foul air inlet (3) to the absorption/desorption tank (1) of the other circuit, and open fluid communication from the common air input line (51) to the absorption/desorption tank (1) of the other circuit; or
iii) close fluid communication from the common foul air inlet (3) to the absorption/desorption tank (1) of the other circuit, and close fluid communication from the common air input line (51) to the absorption/desorption tank (1) of the other circuit.

8. The system of any one of the preceding claims, wherein one or more of the following is satisfied:
wherein one or more absorption media (16) comprises an absorption media loading sensor (17) configured to sense the loading of the absorption media;
wherein one or more absorption/desorption tank (1) comprises a heat exchanger (13) for heating or cooling the absorption media (16), an air quality sensor (15), and/or a pressure sensor (22);
wherein the absorption media (16) is a Metal-organic Framework (MOF), a zeolite, a covalent organic framework, a polymer-based absorber, or a solid amine; and/or
wherein the system further comprises control unit (99) for controlling the valves and pumps.

9. A method of removing CO; from air using a system according to any one of Claims 1 to 8, wherein each air purification circuit is operated in one of the following modes:
i) absorption pressuring mode: wherein airflow from the absorption/desorption tank (1) to the common pollutant outlet (10) is closed, airflow from the absorption/desorption tank (1) to the common clean air outlet (6) is closed, airflow from the absorption/desorption tank (1) to the intermittent air line (50) is closed, and airflow from the common foul air inlet (3) to the absorption/desorption tank (1) is open;
ii) absorption dwell mode: wherein airflow from the absorption/desorption tank (1) to the common pollutant outlet (10) is closed, airflow from the absorption/desorption tank (1) to the common clean air outlet (6) is closed, airflow from the absorption/desorption tank (1) to the intermittent air line (50) is closed, airflow from the common foul air inlet (3) to the absorption/desorption tank (1) is closed, and wherein the pressure inside the absorption/desorption tank (1) is higher than atmospheric pressure;
iii) absorption flow through mode: wherein airflow from the absorption/desorption tank (1) to the common pollutant outlet (10) is closed, airflow from the absorption/desorption tank (1) to the common clean air outlet (6) is open, airflow from the absorption/desorption tank (1) to the intermittent air line (50) is closed, and airflow from the common foul air inlet (3) to the absorption/desorption tank (1) is open;
iv) absorption recirculation mode: wherein airflow from the absorption/desorption tank (1) to the common pollutant outlet (10) is closed, airflow from the absorption/desorption tank (1) to the common clean air outlet (6) is closed, airflow from the absorption/desorption tank (1) to the intermittent air line (50) is open, and airflow from the common foul air inlet (3) to the absorption/desorption tank (1) is either open or closed, wherein airflow from the intermittent air line (50) to the absorption/desorption tank (1) of the same circuit is open, and the airflow from the intermittent air line (50) to one or more absorption/desorption tank (1) of other circuits is closed;
v) divert mode: wherein airflow from the absorption/desorption tank (1) to the common pollutant outlet (10) is closed, airflow from the absorption/desorption tank (1) to the common clean air outlet (6) is closed, airflow from the absorption/desorption tank (1) to the intermittent air line (50) is open, and airflow from the common foul air inlet (3) to the absorption/desorption tank (1) is either open or closed, wherein airflow from the intermittent air line (50) to the absorption/desorption tank (1) of the same circuit is closed, and the airflow from the intermittent air line (50) to one or more absorption/desorption tank (1) of other circuits is open;
vi) desorption mode: wherein airflow from the absorption/desorption tank (1) to the common pollutant outlet (10) is open, airflow from the absorption/desorption tank (1) to the common clean air outlet (6) is closed, airflow from the absorption/desorption tank (1) to the intermittent air line (50) is closed, and airflow from the common foul air inlet (3) to the absorption/desorption tank (1) is closed;
vii) clean air discharge mode: wherein airflow from the absorption/desorption tank (1) to the common pollutant outlet (10) is closed, airflow from the absorption/desorption tank (1) to the common clean air outlet (6) is open, airflow from the absorption/desorption tank (1) to the intermittent air line (50) is closed, and airflow from the common foul air inlet (3) to the absorption/desorption tank (1) is closed; or
viii) isolated mode: wherein airflow from the absorption/desorption tank (1) to the common pollutant outlet (10) is closed, airflow from the absorption/desorption tank (1) to the common clean air outlet (6) is closed, airflow from the absorption/desorption tank (1) to the intermittent air line (50) is closed, and airflow from the common foul air inlet (3) to the absorption/desorption tank (1) is closed.

10. The method of Claim 9, further comprising cooling the absorption media (16) when the corresponding air purification circuit is in one of absorption pressuring mode, absorption dwell mode, absorption flow through mode, or absorption recirculation mode.

11. The method of Claim 9 or Claim 10, further comprising heating the absorption media (16) when the corresponding air purification circuit is in desorption mode.

12. The method of Claims 9 to 11, wherein the following modes further comprise:
i) absorption pressuring mode: using a pump to encourage airflow from the common foul air inlet (3) to the absorption/desorption tank (1);
ii) absorption flow through mode: using a pump to encourage airflow from the common foul air inlet (3) to the absorption/desorption tank (1), and/or using a pump to encourage airflow from the absorption/desorption tank (1) to the common clean air outlet (6);
iii) absorption recirculation mode: using a pump to encourage airflow from the absorption/desorption tank (1) to the intermittent air line (50);
iv) divert mode: using a pump to encourage airflow from the absorption/desorption tank (1) to the intermittent air line (50); and/or
v) desorption mode: using a vacuum pump to reduce pressure in the absorption/desorption tank (1).

13. The method of any one of Claims 9 to 12, further comprising using one or more sensors in the absorption/desorption tank (1), such as sensors for air quality and air pressure, and/or a sensor which detects or calculates pollutant loading on the selected absorption media, and input signals from the one or more sensors to a control unit (99), wherein the control unit (99) switches the mode of one or more of the circuits according to the sensor input.

14. A method of retrofitting a system as defined in any one of Claims 1 to 8 into a submarine.

15. A submarine comprising one or more system as defined in any one of Claims 1 to 8.
